# EUROPEAN PATENT APPLICATION

(11) **EP 2 334 124 A1**
(43) Date of publication of application: **15.06.2011**
(21) Application number: 09814617.8
(22) Date of filing: 17.09.2009
(51) Int. Cl.: H04W 52/30

(54) **MOBILE STATION AND WIRELESS BASE STATION**

(30) Priority: 22.09.2008 JP 2008243397
(71) Applicant: NTT DOCOMO, INC., Chiyoda-ku Tokyo 100-6150 (JP)
(72) Inventor: ISHII, Hiroyuki, Chiyoda-ku, Tokyo 100-6150 (JP); IWAMURA, Mikio, Chiyoda-ku, Tokyo 100-6150 (JP); HAYASHI, Takahiro, Chiyoda-ku, Tokyo 100-6150 (JP); ISHIKAWA, Yoshihiro, Chiyoda-ku, Tokyo 100-6150 (JP)
(74) Representative: HOFFMANN EITLE
(86) International application number: PCT/JP2009/066222
(87) International publication number: WO 2010/032773

(57) **Abstract**

A mobile station (UE) according to the present invention includes: a transmission power determining unit (13) configured to determine a transmission power in an uplink shared channel, in accordance with a maximum transmission power value corresponding to power class of the mobile station (UE), the number of resource blocks for the uplink shared channel, path loss between the mobile station (UE) and a radio base station (eNB) which is a connection destination of the uplink shared channel, and transmission power control information received from the radio base station (eNB); wherein when receiving a maximum allowable transmission power value from the radio base station (end) , the transmission power determining unit (13) is configured to determine transmission power in the uplink shared channel, using the maximum allowable transmission power value instead of the maximum transmission power value corresponding to the power class of the mobile station (UE).

## Description

### TECHNICAL FIELD

The present invention relates to a mobile station and a radio base station which are configured to control uplink transmission power.

### BACKGROUND ART

In mobile communication systems of the LTE (Long Term Evolution) scheme, the maximum transmission power value for an uplink channel with which a mobile station can make transmission is specified in the 3GPP.

### SUMMARY OF THE INVENTION

### PROBLEMS TO BE SOLVED BY THE INVENTION

In "places in which radio waves from a mobile station UE affect other electronic equipment", such as hospitals, airplanes and research facilities with highly sensitive measuring instruments and receivers, however, transmission power which is smaller than the above-described maximum transmission power value should sometimes be set to be the maximum transmission power value for an uplink channel with which a mobile station can make transmission.

The present invention is made in view of the above-described circumference and an object thereof is to provide a mobile station and a radio base station capable of flexibly changing the maximum transmission power for an uplink channel with which transmission can be made.

### MEANS FOR SOLVING THE PROBLEM

A first aspect of the present invention is summarized as a mobile station configured to control a transmission power in an uplink shared channel, including: a transmission power determining unit configured to determine the transmission power in the uplink shared channel, in accordance with a maximum transmission power value corresponding to power class of the mobile station, the number of resource blocks for the uplink shared channel, path loss between the mobile station and a radio base station which is a connection destination of the uplink shared channel, and transmission power control information received from the radio base station; wherein when receiving a maximum allowable transmission power value from the radio base station, the transmission power determining unit is configured to determine transmission power in the uplink shared channel, using the maximum allowable transmission power value instead of the maximum transmission power value corresponding to the power class of the mobile station.

A second aspect of the present invention is summarized as a mobile station configured to control a transmission power in a physical uplink control channel, including: a transmission power determining unit configured to determine the transmission power in the physical uplink control channel, in accordance with a maximum transmission power value corresponding to power class of the mobile station, path loss between the mobile station and a radio base station which is a connection destination of the physical uplink control channel, and transmission power control information received from the radio base station; wherein when receiving a maximum allowable transmission power value from the radio base station, the transmission power determining unit is configured to determine transmission power in the physical uplink control channel using the maximum allowable transmission power value instead of the maximum transmission power value corresponding to the power class of the mobile station.

A third aspect of the present invention is summarized as a mobile station configured to control a transmission power in an uplink reference signal, including: a transmission power determining unit conf igured to determine the transmission power in the uplink reference signal, in accordance with a maximum transmission power value corresponding to power class of the mobile station, power offset between the uplink reference signal and an uplink shared channel, the number of resource blocks for the uplink reference signal, path loss between the mobile station and a radio base station which is a connection destination of the uplink reference signal, and transmission power control information received from the radio base station; wherein when receiving a maximum allowable transmission power value from the radio base station, the transmission power determining unit is configured to determine transmission power in the uplink reference signal using the maximum allowable transmission power value instead of the maximum transmission power value corresponding to the power class of the mobile station.

A fourth aspect of the present invention is summarized as a mobile station configured to control a transmission power in a random access channel, including: a transmission power determining unit configured to determine the transmission power in the random access channel, in accordance with a maximum transmission power value corresponding to power class of the mobile station, power offset corresponding to a preamble format, path loss between the mobile station and a radio base station which is a connection destination of the random access channel, offset for power ramping, and the number of transmission of a preamble; wherein when receiving a maximum allowable transmission power value from the radio base station, the transmission power determining unit is configured to determine transmission power in the random access channel using the maximum allowable transmission power value instead of the maximum transmission power value corresponding to the power class of the mobile station.

In the first to fourth aspect of the present invention, the transmission power determining unit can be configured to use the maximum allowable transmission power value instead of the maximum transmission power value corresponding to the power class of the mobile station, only when the mobile station is operating in a predetermined mode.

the first to fourth aspect of the present invention, the transmission power determining unit can be configured to use the maximum allowable transmission power value instead of the maximum transmission power value corresponding to the power class of the mobile station, only when the maximum allowable transmission power value is received from a predetermined radio base station.

A fifth aspect of the present invention is summarized as a radio base station which communicates with a mobile station configured to control a transmission power in an uplink shared channel, including: a reporting unit configured to report a maximum allowable transmission power value, to the mobile station configured to determine the transmission power in the uplink shared channel in accordance with a maximum transmission power value corresponding to power class of the mobile station, the number of resource blocks for the uplink shared channel, path loss between the mobile station and a radio base station which is a connection destination of the uplink shared channel, and transmission power control information received from the radio base station, wherein: the mobile station is configured to use the maximum allowable transmission power value instead of the maximum transmission power value corresponding to a power class of the mobile station when the maximum allowable transmission power value is received from the radio base station; and the reporting unit is configured to report a value smaller than the maximum transmission power value corresponding to the power class of the mobile station as the maximum allowable transmission power value, when an area in which communication is established between the radio base station and the mobile station is an area in a predetermined range.

### EFFECT OF THE INVENTION

As described above, according to the present invention, a mobile station and a radio base station capable of flexibly changing the maximum transmission power for an uplink channel with which transmission can be made can be provided.

### BRIEF DESCRIPTION OF THE DRAWINGS

[Fig. 1] Fig. 1 is a diagram of an entire configuration of a mobile communication system according to a first embodiment of the present invention.
[Fig- 2] Fig. 2 is a functional block diagram of a mobile station according to the first embodiment of the present invention.
[Fig. 3] Fig. 3 is a diagram illustrating exemplary setting of parameters in the mobile station according to the first embodiment of the present invention.
[Fig. 4] Fig. 4 is a diagram illustrating exemplary setting of parameter in the mobile station according to the first embodiment of the present invention.
[Fig. 5] Fig. 5 is a diagram illustrating an exemplary equation for the determination of transmission power in a PUSCH in the mobile station according to the first embodiment of the present invention.
[Fig. 6] Fig. 6 is a diagram illustrating an exemplary equation for the determination of transmission power in a PUCCH in the mobile station according to the first embodiment of the present invention.
[Fig. 7] Fig. 7 is a diagram illustrating an exemplary equation for the determination of transmission power in a "Sounding RS" in the mobile station according to the first embodiment of the present invention.
[Fig. 8] Fig. 8 is a diagram illustrating an exemplary equation for the determination of transmission power in a PRACH in the mobile station according to the first embodiment of the present invention.
[Fig. 9] Fig. 9 is a functional block diagram of a radio base station according to the first embodiment of the present invention.

### BEST MODES FOR CARRYING OUT THE INVENTION

### (Mobile communication system according to first embodiment of the present invention)

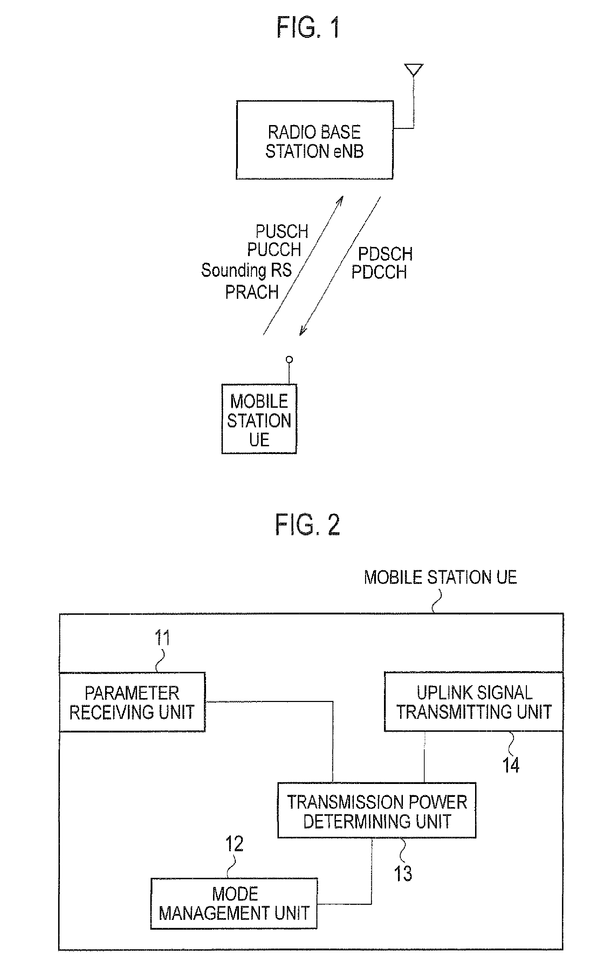

With reference to Figs. 1 to 8, a mobile communication system according to a first embodiment of the present invention will be described. The mobile communication system according to the first embodiment of the present invention is a mobile communication system of the LTE scheme.

As illustrated in Fig. 1, in the mobile communication system according to the present embodiment, a radio base station eNB is configured to transmit downlink data signals via a physical downlink shared channel PDSCH to a mobile station UE, and to transmit downlink control signals via a physical downlink control channel PDCCH to a mobile station UE.

The mobile station UE is configured to also transmit uplink data signals via a physical uplink shared channel PUSCH to the radio base station eNB, and to transmit uplink control signals via a physical uplink control channel PUCCH to the radio base station eNB.

The mobile station UE is configured to also transmit a preamble via a physical random access channel PRACH to the radio base station eNB. The mobile station UE is configured to also transmit reference signals for uplink sounding (Sounding RS) . The reference signals for uplink sounding (Sounding RS) may be used for, for example, uplink transmission power control and uplink adaptive modulation encoding.

As illustrated in Fig. 2, the mobile station UE includes a parameter receiving unit 11, a mode management unit 12, a transmission power determining unit 13 and an uplink signal transmitting unit 14.

The parameter receiving unit 11 is configured to receive a predetermined parameter value transmitted from the radio base station eNB.

For example, the parameter receiving unit 11 is configured to receive the maximum allowable transmission power value as the predetermined parameter value. Here, the parameter receiving unit 11 may be configured to receive the maximum allowable transmission power value as broadcast information or may be configured to receive the maximum allowable transmission power value by dedicated signaling. The dedicated signaling may be reported by, for example, an RRC message.

If, for example, the maximum transmission power of the uplink signals in the mobile station UE needs to be reduced, the radio base station eNB may transmit "18 dBm" as the value of the maximum allowable transmission power. If, alternatively, the maximum transmission power of the uplink signals in the mobile station UE needs to be increased or the maximum transmission power in the mobile station UE does not need to be reduced, the radio base station eNB may transmit "23 dBm" as the value of the maximum allowable transmission power. Here, the "23 dBm" may be the maximum transmission power depending on a power class of the mobile station.

In particular, when the maximum transmission power of the uplink signals in the mobile station UE needs to be reduced, the value of the maximum allowable transmission power is set to be a value smaller than the maximum transmission power depending on the power class of the mobile station. When the maximum transmission power of the uplink signals in the mobile station UE needs to be increased or the maximum transmission power of the uplink signals in the mobile station UE does not need to be reduced, the value of the maximum allowable transmission power is set to be a value which is larger or the same as the maximum transmission power depending on the power class of the mobile station.

The parameter receiving unit 11 is configured to receive a value of a parameter P_{o_PUSCH}(i) and a value of a parameter α as the predetermined parameter value. Here, the value of the parameter P_{o_PUSCH} (i) may be considered as a value equivalent to a target SIR of PUSCH in a subframe i.

The value of the parameter P_{o_PUSCH} (i) and the value of the parameter α are used for the determination of the transmission power of the PUSCH or the reference signals for the uplink sounding (Sounding RS), which will be described latter.

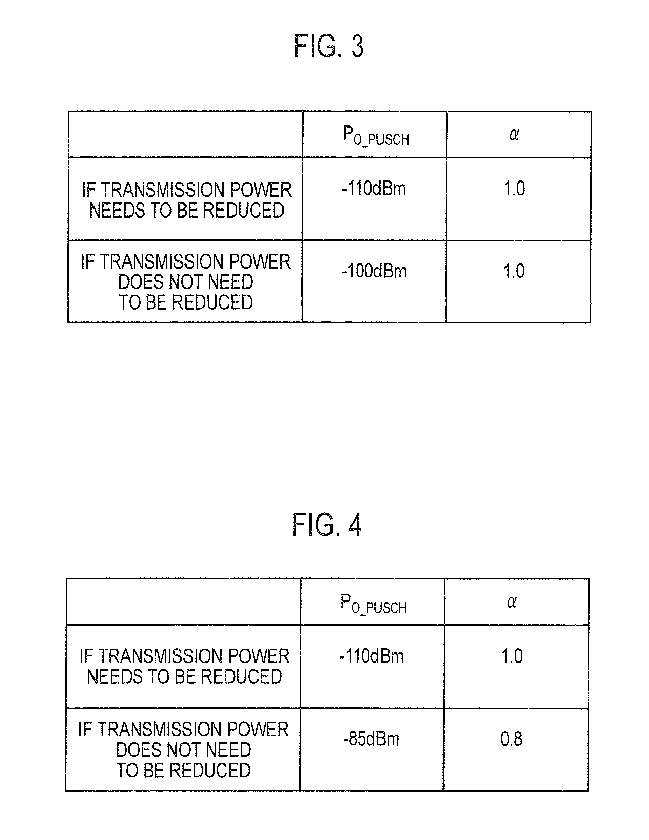

For example, as illustrated in Fig. 3, the radio base station eNB may transmit "-110 dBm" as the value of the parameter P_{o_PUSCH} (i) and "1.0" as the value of the parameter α, when the transmission power of the uplink signals in the mobile station UE needs to be reduced. The radio base station eNB may transmit "-100 dBm" as the value of the parameter P_{o_PUSCH} (i) and "1.0" as the value of the parameter α, when the transmission power of the uplink signals in the mobile station UE needs to be increased or the transmission power of the uplink signals in the mobile station UE does not need to be reduced.

That is, the value of the parameter P_{o_PUSCH} (i) is set to be a small value, when the transmission power of the uplink signals in the mobile station UE needs to be reduced. The value of the parameter P_{o-PUSCH} (i) is set to be a large value, when the transmission power of the uplink signals in the mobile station UE needs to be increased or the transmission power of the uplink signals in the mobile station UE does not need to be reduced.

As illustrated in Fig. 4, the radio base station eNB may transmit "-110 dBm" as the value of the parameter P_{o_PUSCH} (i) and "1.0" as the value of the parameter α, when the transmission power of the uplink signals in the mobile station UE needs to be reduced. The radio base station eNB may transmit "-85 dBm" as the value of the parameter P_{o_PUSCH} (i) and "0.8" as the value of the parameter α, when the transmission power of the uplink signals in the mobile station UE needs to be increased or the transmission power of the uplink signals in the mobile station UE does not need to be reduced.

That is, the value of the parameter P_{o_PUSCH} (i) and the value of the parameter α are set to be values so as to reduce the transmission power, when the transmission power of the uplink signals in the mobile station UE needs to be reduced. The value of the parameter P_{o_PUSCH} (i) is set to be a value so as to increase the transmission power, when the transmission power of the uplink signals in the mobile station UE needs to be increased or the transmission power of the uplink signals in the mobile station UE does not need to be reduced.

The parameter receiving unit 11 is configured to receive a value of a parameter P_{o_PUSCH} (i) as the predetermined parameter value. Here, the value of the parameter P_{o_PUSCH} (i) may be considered as a value equivalent to a target SIR of PUCCH in a subframe i.

For example, the radio base station eNB may transmit "-120 dBm" as the value of the parameter P_{o_PUSCH} (i) , when the transmission power of the uplink signals in the mobile station UE needs to be reduced. The radio base station eNB may transmit "-110 dBm" as the value of the parameter P_{o_PUSCH} (i) , when the transmission power of the uplink signals in the mobile station UE needs to be increased or the transmission power of the uplink signals in the mobile station UE does not need to be reduced.

That is, the value of the parameter P_{o_PUSCH} (i) is set to be a small value, when the transmission power of the uplink signals in the mobile station UE needs to be reduced. The value of the parameter P_{o_PUSCH} (i) is set to be a large value, when the transmission power of the uplink signals in the mobile station UE needs to be increased or the transmission power of the uplink signals in the mobile station UE does not need to be reduced.

The parameter receiving unit 11 is configured to receive a value of a parameter P_{o_pre} (i) as the predetermined parameter value. Here, the value of the parameter P_{o_pre} (i) may be considered as a value equivalent to a target SIR of PRACH in a subframe i.

For example, the radio base station eNB may transmit "-115 dBm" as the value of the parameter P_{o_pre} (i), when the transmission power of the uplink signals in the mobile station UE needs to be reduced. The radio base station eNB may transmit "-105 dBm" as the value of the parameter P_{o_pre} (i), when the transmission power of the uplink signals in the mobile station UE needs to be increased or the transmission power of the uplink signals in the mobile station UE does not need to be reduced.

That is, the value of the parameter P_{o_pre} (i) is set to be a small value, when the transmission power of the uplink signals in the mobile station UE needs to be reduced. The value of the parameter P_{o_pre} (i) is set to be a large value, when the transmission power of the uplink signals in the mobile station UE needs to be increased or the transmission power of the uplink signals in the mobile station UE does not need to be reduced.

The mode management unit 12 is configured to manage the mode of the mobile station UE. For example, the mode management unit 12 may be configured to manage whether or not the mode of the mobile station UE is an extension mode.

Alternatively, for example, the mode management unit 12 may be configured to manage whether or not the mode of the mobile station UE is a mode in which it is located in and camping on a Home Node B area, or in a CSG (closed subscriber group) mode.

Here, the Home Node B is a radio base station mainly installed indoors or at ordinary home. The CSG is a group of certain specific users which can communicate with the radio base station. That is, "the mobile station UE is in the CSG mode" means that the mobile station UE is located in and camping on an area of the radio base station belonging to the CSG.

The transmission power determining unit 13 is configured to determine the transmission power of the uplink signals.

Specifically, the transmission power determining unit 13 is configured to determine the transmission power P_{PUSCH} (i) in the uplink shared channel PUSCH in accordance with the following: the maximum transmission power value Pₘₐₓ corresponding to the power class of the mobile station UE; the number of resource blocks M_{PUSCH} (i) for the uplink shared channel PUSCH in the subframe i; the parameter P_{o_PUSCH} (i) ; the parameter α; path loss PL between the mobile station UE and the radio base station eNB which is a connection destination of the uplink shared channel PUSCH; an offset value in accordance with MCS; and transmission power control information f (i) related to the subframe i received from the radio base station eNB.

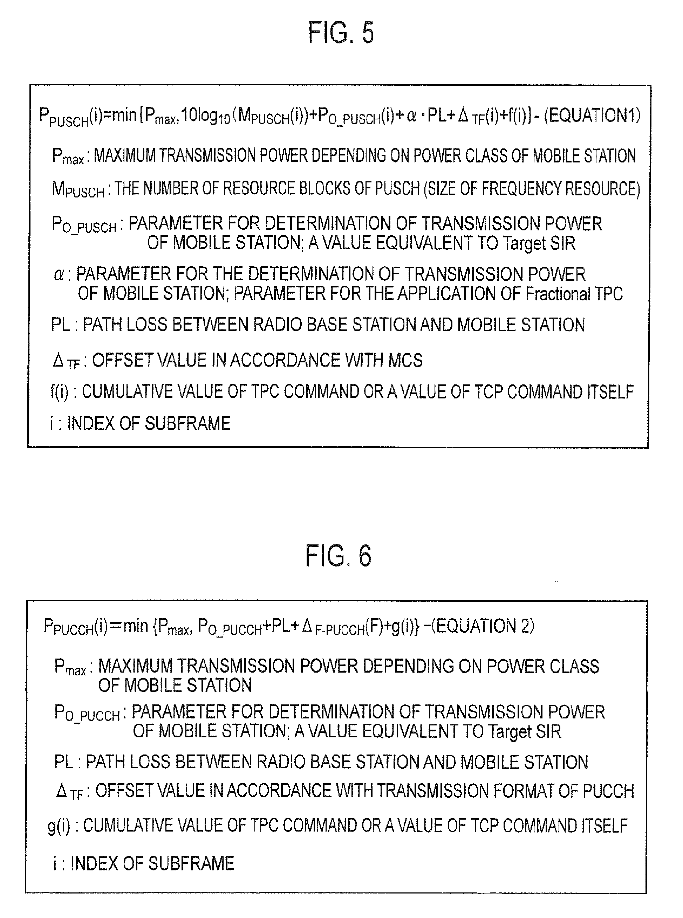

For example, the transmission power determining unit 13 is configured to determine the transmission power P_{PUSCH} (i) in the uplink shared channel PUSCH in accordance with the "Equation 1" given in Fig. 5.

Here, the transmission power determining unit 13 may be configured to determine, when the maximum allowable transmission power value is received from the radio base station eNB, the transmission power P_{PUSCH} (i) in the uplink shared channel PUSCH using the maximum allowable transmission power value instead of the maximum transmission power value Pₘₐₓ corresponding to the power class of the mobile station UE.

As described above, values illustrated in Fig. 3 or 4 may be set for the parameter P_{o_PUSCH} (i) and the parameter α dependent on whether or not the transmission power of the uplink signals in the mobile station UE needs to be reduced.

The transmission power determining unit 13 is configured to determine the transmission power P_{PUCCH} (i) in the physical uplink control channel PUCCH in accordance with the following: the maximum transmission power value Pₘₐₓ corresponding to the power class of the mobile station; the parameter P_{o_PUSCH} (i) ; path loss PL between the mobile station UE and the radio base station eNB which is a connection destination of the physical uplink control channel PUCCH; an offset value in accordance with a transmission format of the PUCCH; and transmission power control information g (i) related to the subframe i received from the radio base station eNB.

For example, the transmission power determining unit 13 is configured to determine the transmission power P_{PUCCH} (i) in the physical uplink control channel PUCCH in accordance with the "Equation 2" given in Fig. 6.

A term of "h (n) " may be added to the "Equation 2". Here, the "h (n) " is a function depending on the format of the PUCCH and the "n" which is an argument thereof may be the number of bits of the control signals, such as CQI and ACK. That is, the value of the "h (n) " may be determined in accordance with, for example, the format of the PUCCH and the number of bits of the control signals mapped on the PUCCH.

Here, the transmission power determining unit 13 may be configured to determine, when the maximum allowable transmission power value is received from the radio base station eNB, the transmission power P_{PUCCH} (i) in the physical uplink control channel PUCCH using the maximum allowable transmission power value instead of the maximum transmission power value Pₘₐₓ corresponding to the power class of the mobile station UE.

As described above, the parameter P_{o_PUSCH} (i) may be set to be a small, when the transmission power of the uplink signals in the mobile station UE needs to be reduced. The parameter P_{o_PUSCH} (i) may be set to be a large value, when the transmission power of the uplink signals in the mobile station UE does not need to be reduced.

The transmission power determining unit 13 is configured to determine transmission power P_{SRS} (i) in the reference signal for uplink sounding (Sounding RS), in accordance with the following: the maximum transmission power value Pₘₐₓ corresponding to the power class of the mobile station UE; a power offset P_{SRS-QFFSFT} between the reference signals for the uplink sounding (Sounding RS) and the uplink shared channel PUSCH; the number of resource blocks M_{SRS} for the reference signals for the uplink sounding (Sounding RS); a parameter P_{o_PUSCH}, the parameter α; path loss PL between the mobile station UE and the radio base station eNB which is a connection destination of the reference signals for the uplink sounding (Sounding RS) ; and transmission power control information f (i) related to the subframe i received from the radio base station eNB.

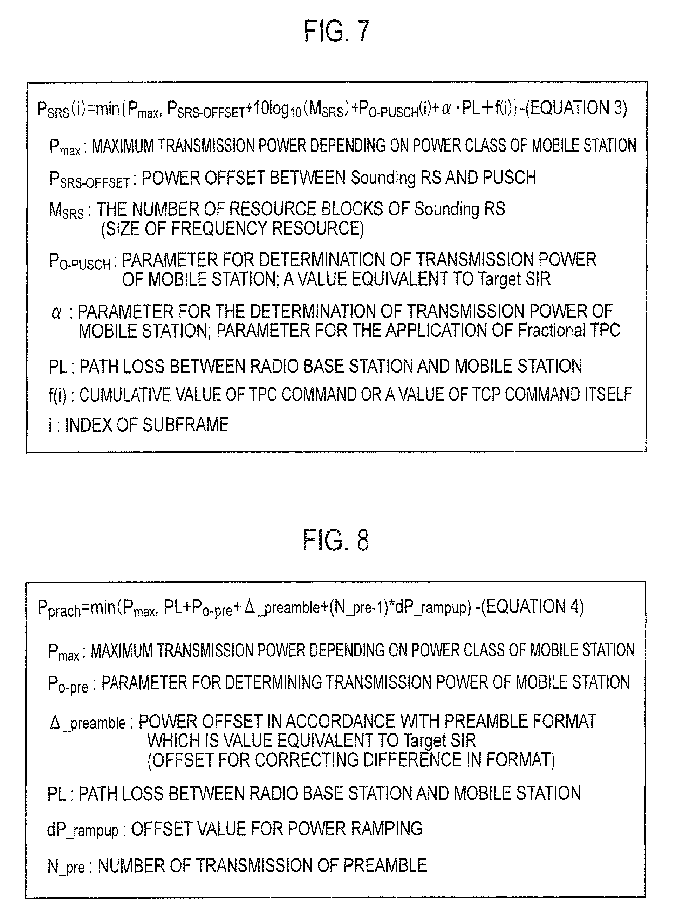

For example, the transmission power determining unit 13 is configured to determine the transmission power P_{SRS} (i) in the reference signals for the uplink sounding (Sounding RS) in accordance with the "Equation 3" given in Fig. 7.

Here, the transmission power determining unit 13 is configured to determine, when the maximum allowable transmission power value is received from the radio base station eNB, the transmission power P_{SRS} (i) in the reference signals for the uplink sounding (Sounding RS) using the maximum allowable transmission power value instead of the maximum transmission power value Pₘₐₓ corresponding to the power class of the mobile station UE.

As described above, values illustrated in Fig. 3 or 4 may be set for the parameter P_{o_PUSCH} (i) and the parameter α dependent on whether or not the transmission power of the uplink signals in the mobile station UE needs to be reduced.

The transmission power determining unit 13 is configured to determine transmission power P_{prach} in a random access channel PRACH, in accordance with the following: the maximum transmission power value Pₘₐₓ corresponding to the power class of the mobile station UE; a power offset Δ_preamble; corresponding to a preamble format; path loss PL between the mobile station UE and the radio base station eNB which is a connection destination of the random access channel PRACH; a parameter P_{o_pre}; an offset dP_rampup for power ramping; and the number of transmission N_pre of the preamble.

For example, the transmission power determining unit 13 is configured to determine the transmission power P_{prach} in the random access channel PRACH in accordance with the "Equation 4" given in Fig. 8.

Here, the transmission power determining unit 13 may be configured to determine, when the maximum allowable transmission power value is received from the radio base station eNB, the transmission power P_{prach} in the random access channel PRACH using the maximum allowable transmission power value instead of the maximum transmission power value Pₘₐₓ corresponding to the power class of the mobile station UE.

As described above, the parameter P_{o_pre} (i) may be set to be a small, when the transmission power of the uplink signals in the mobile station UE needs to be reduced. The parameter P_{o_pre} (i) may be set to be a large value, when the transmission power of the uplink signals in the mobile station UE does not need to be reduced.

The transmission power determining unit 13 may also be configured to use the above-described maximum allowable transmission power value instead of the maximum transmission power value Pₘₐₓ corresponding to the power class of the mobile station UE, only when the mobile station UE is operating in a predetermined mode (e.g., an extension mode).

The transmission power determining unit 13 may also be configured to use the above-described maximum allowable transmission power value instead of the maximum transmission power value Pₘₐₓ corresponding to the power class of the mobile station UE, only when the maximum allowable transmission power value is received from a predetermined radio base station (e. g. , the Home Node B).

Alternatively, the maximum allowable transmission power value may be always reported from the radio base station eNB to the mobile station UE. A value smaller than that of the maximum transmission power value Pₘₐₓ corresponding to the power class of the mobile station UE may be reported as the maximum allowable transmission power value, when the transmission power of the uplink signals in the mobile station UE needs to be reduced. A value which is the same as the maximum transmission power value Pₘₐₓ corresponding to the power class of the mobile station UE may be reported as the maximum allowable transmission power value, when the transmission power of the uplink signals in the mobile station UE does not need to be reduced.

In this case, the transmission power determining unit 13 may be configured to always use the above-described maximum allowable transmission power value instead of the maximum transmission power value Pₘₐₓ corresponding to the power class of the mobile station UE.

The uplink signal transmitting unit 14 may be configured to transmit, with the transmission power determined by the transmission power determining unit 13, uplink data signals via the uplink shared channel PUSCH, uplink control signals via the physical uplink control channel PUCCH, the reference signals for the uplink sounding (Sounding RS) and a preamble via the random access channel PRACH.

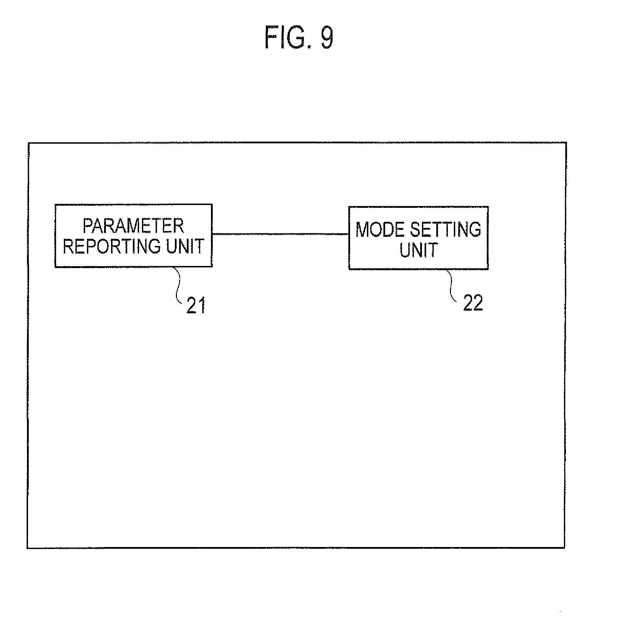

As illustrated in Fig. 9, the radio base station eNB includes a parameter reporting unit 21 and a mode setting unit 22.

The parameter reporting unit 21 is configured to report a predetermined parameter value to the mobile station UE. Here, the predetermined parameter value may be reported as broadcast information or may be reported by dedicated signaling. The dedicated signaling may be transmitted by a RRC message, for example.

For example, the parameter reporting unit 21 is configured to report the maximum allowable transmission power value as the predetermined parameter value.

Here, the parameter reporting unit 21 may report a value smaller than the maximum transmission power depending on the power class of the mobile station as the value of the maximum allowable transmission power, when the maximum transmission power of the uplink signals in the mobile station UE needs to be reduced. The parameter reporting unit 21 may report a larger value or the same value as the maximum transmission power depending on the power class of the mobile station as the value of the maximum allowable transmission power, when the maximum transmission power of the uplink signals in the mobile station UE needs to be increased or when the maximum transmission power of the uplink signals in the mobile station UE does not need to be reduced. Exemplary setting of the value of the maximum allowable transmission power is the same as that described for the parameter receiving unit 11 and thus description thereof will be omitted.

Alternatively, the parameter reporting unit 21 is configured to report the value of the parameter P_{o_PUSCH} (i) and the value of the parameter α as the predetermined parameter value. Here, the value of the parameter P_{o_PUSCH} (i) may be considered as a value equivalent to a target SIR of PUSCH in a subframe i.

The value of the parameter P_{o_PUSCH} (i) and the value of the parameter α are used for the determination of the transmission power of the PUSCH or the reference signals for the uplink sounding (Sounding RS), which will be described later.

Here, the parameter reporting unit 21 may report values so as to reduce the transmission power as the value of the parameter P_{o_PUSCH} (i) and the value of the parameter α, when the transmission power of the uplink signals in the mobile station UE needs to be reduced. The parameter reporting unit 21 may report values so as to increase the transmission power as the value of the parameter P_{o_PUSCH} (i) and the value of the parameter α, when the transmission power of the uplink signals in the mobile station UE needs to be increased or when the transmission power of the uplink signals in the mobile station UE does not need to be reduced. Exemplary setting of the value of the parameter P_{o_PUSCH} (i) and the value of the parameter α is the same as that described with reference to Figs. 3 and 4 and thus description thereof will be omitted.

Alternatively, the parameter reporting unit 21 is configured to report the value of the parameter P_{o_PUSCH} (i) as the predetermined parameter value. Here, the value of the parameter P_{o_PUSCH} (i) may be considered as a value equivalent to the target SIR of PUCCH in the subframe i.

Here, the parameter reporting unit 21 may report a value so as to reduce the transmission power, i.e., a small value, as the value of the parameter P_{o_PUSCH} (i) , when the transmission power of the uplink signals in the mobile station UE needs to be reduced. The parameter reporting unit 21 may report a value so as to increase the transmission power, i.e., a large value, as the value of the parameter P_{o_PUSCH} (i) , when the transmission power of the uplink signals in the mobile station UE needs to be increased or when the transmission power of the uplink signals in the mobile station UE does not need to be reduced. Exemplary setting of the value of the parameter P_{o_PUSCH} (i) is the same as that described for the parameter receiving unit 11 and thus description thereof will be omitted.

Alternatively, the parameter reporting unit 21 is configured to report the value of the parameter P_{o_pre} (i) as the predetermined parameter value. Here, the value of the parameter P_{o_pre} (i) may be considered as a value equivalent to the target SIR of the PRACH in the subframe i.

Here, the parameter reporting unit 21 may report a value so as to reduce the transmission power, i.e., a small value, as the value of the parameter P_{o_pre} (i), when the transmission power of the uplink signals in the mobile station UE needs to be reduced. The parameter reporting unit 21 may report a value so as to increase the transmission power, i.e., a large value, as the value of the parameter P_{o_pre} (i) , when the transmission power of the uplink signals in the mobile station UE needs to be increased or when the transmission power of the uplink signals in the mobile station UE does not need to be reduced. Exemplary setting of the value of the parameter P_{o_pre} (i) is the same as that described for the parameter receiving unit 11 and thus description thereof will be omitted.

Information as to whether or not the transmission power of the uplink signals in the mobile station UE needs to be reduced, which has been described, is reported from the mode setting unit 22. That is, the reporting unit 21 reports the predetermined parameter value, in accordance with the "information as to whether or not it is necessary to lower the transmission power of the uplink signals in the mobile station UE" reported from the mode setting unit 22.

The mode setting unit 22 is configured to determine whether or not the transmission power of the uplink signals in the mobile station UE needs to be reduced and report the determination result to the parameter reporting unit 21.

For example, the mode setting unit 22 may determine that the transmission power of the uplink signals in the mobile station UE needs to be reduced, when an area in which the radio base station eNB provides a mobile service ("service area") includes hospitals, airplanes, trains and buildings with highly sensitive measuring instruments and receivers.

Alternatively, the mode setting unit 22 may determine that the transmission power of the uplink signals in the mobile station UE needs to be reduced, when the radio base station eNB is located in hospitals, airplanes, trains and buildings with highly sensitive measuring instruments and receivers.

The hospitals, airplanes and buildings with highly sensitive measuring instruments and receivers described above may be defined as "places in which radio waves from the mobile station UE affects other electronic equipment" in a broader sense.

Alternatively, the mode setting unit 22 may determine that the transmission power of the uplink signals in the mobile station UE needs to be reduced, when the radio base station eNB is in the Home Node B. Alternatively, the mode setting unit 22 may determine that the transmission power of the uplink signals in the mobile station UE needs to be reduced, when the area in which the radio base station eNB provides the mobile service is a CSG cell. Here, the CSG cell is a cell in which only users belonging to a certain specific group can make communication.

Alternatively, the mode setting unit 22 may determine that the transmission power of the uplink signals in the mobile station UE needs to be reduced regarding a mobile station which communicates in an extension mode. In this case, the predetermined parameter value may be reported by dedicated signaling to the mobile station UE.

Alternatively, the mode setting unit 22 may determine that the transmission power of the uplink signals in the mobile station UE needs to be reduced, when the radio base station eNB provides communication in an extension mode.

### (Advantageous effect of mobile communication system according to first embodiment of the present invention)

With the mobile communication system according to the present embodiment, the radio base station eNB can reduce, using the maximum allowable transmission power, the maximum transmission power with which the mobile station UE can make transmission in the "places in which radio waves from a mobile station UE affect other electronic equipment", such as hospitals, airplanes and research facilities with highly sensitive measuring instruments and receivers.

The operation of the above-described mobile station UE or the radio base station eNB may be implemented by a hardware, may also be implemented by a software module executed by a processor, and may further be implemented by the combination of the both.

The software module may be arranged in a storing medium of an arbitrary format such as RAM (Random Access Memory), a flash memory, ROM (Read Only Memory), EPROM(Erasable Programmable ROM), EEPROM(Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the mobile station UE or the radio base station eNB. As a discrete component, such a storing medium and processor may be arranged in the mobile station UE or the radio base station eNB.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

## Claims

1. A mobile station configured to control a transmission power in an uplink shared channel, comprising:
a transmission power determining unit configured to determine the transmission power in the uplink shared channel, in accordance with a maximum transmission power value corresponding to power class of the mobile station, the number of resource blocks for the uplink shared channel, path loss between the mobile station and a radio base station which is a connection destination of the uplink shared channel, and transmission power control information received from the radio base station; wherein
when receiving a maximum allowable transmission power value from the radio base station, the transmission power determining unit is configured to determine transmission power in the uplink shared channel, using the maximum allowable transmission power value instead of the maximum transmission power value corresponding to the power class of the mobile station.

2. A mobile station configured to control a transmission power in a physical uplink control channel, comprising:
a transmission power determining unit configured to determine the transmission power in the physical uplink control channel, in accordance with a maximum transmission power value corresponding to power class of the mobile station, path loss between the mobile station and a radio base station which is a connection destination of the physical uplink control channel, and transmission power control information received from the radio base station; wherein
when receiving a maximum allowable transmission power value from the radio base station, the transmission power determining unit is configured to determine transmission power in the physical uplink control channel using the maximum allowable transmission power value instead of the maximum transmission power value corresponding to the power class of the mobile station.

3. A mobile station configured to control a transmission power in an uplink reference signal, comprising:
a transmission power determining unit configured to determine the transmission power in the uplink reference signal, in accordance with a maximum transmission power value corresponding to power class of the mobile station, power offset between the uplink reference signal and an uplink shared channel, the number of resource blocks for the uplink reference signal, path loss between the mobile station and a radio base station which is a connection destination of the uplink reference signal, and transmission power control information received from the radio base station; wherein
when receiving a maximum allowable transmission power value from the radio base station, the transmission power determining unit is configured to determine transmission power in the uplink reference signal using the maximum allowable transmission power value instead of the maximum transmission power value corresponding to the power class of the mobile station.

4. A mobile station configured to control a transmission power in a random access channel, comprising:
a transmission power determining unit configured to determine the transmission power in the random access channel, in accordance with a maximum transmission power value corresponding to power class of the mobile station, power offset corresponding to a preamble format, path loss between the mobile station and a radio base station which is a connection destination of the random access channel, offset for power ramping, and the number of transmission of a preamble; wherein
when receiving a maximum allowable transmission power value from the radio base station, the transmission power determining unit is configured to determine transmission power in the random access channel using the maximum allowable transmission power value instead of the maximum transmission power value corresponding to the power class of the mobile station.

5. The mobile station according to any one of claims 1 to 4, wherein
the transmission power determining unit is configured to use the maximum allowable transmission power value instead of the maximum transmission power value corresponding to the power class of the mobile station, only when the mobile station is operating in a predetermined mode.

6. The mobile station according to any one of claims 1 to 4, wherein
the transmission power determining unit is configured to use the maximum allowable transmission power value instead of the maximum transmission power value corresponding to the power class of the mobile station, only when the maximum allowable transmission power value is received from a predetermined radio base station.

7. A radio base station which communicates with a mobile station configured to control a transmission power in an uplink shared channel, comprising:
a reporting unit configured to report a maximum allowable transmission power value, to the mobile station configured to determine the transmission power in the uplink shared channel in accordance with a maximum transmission power value corresponding to power class of the mobile station, the number of resource blocks for the uplink shared channel, path loss between the mobile station and a radio base station which is a connection destination of the uplink shared channel, and transmission power control information received from the radio base station, wherein:
the mobile station is configured to use the maximum allowable transmission power value instead of the maximum transmission power value corresponding to a power class of the mobile station when the maximum allowable transmission power value is received from the radio base station; and
the reporting unit is configured to report a value smaller than the maximum transmission power value corresponding to the power class of the mobile station as the maximum allowable transmission power value, when an area in which communication is established between the radio base station and the mobile station is an area in a predetermined range.
